(19) Europäisches Patentamt
European Patent Office
Office européen des brevets

(11) EP 4 443 586 A1

(12) **EUROPEAN PATENT APPLICATION**

(43) Date of publication:
**09.10.2024 Bulletin 2024/41**

(21) Application number: **23197833.9**

(22) Date of filing: **18.09.2023**

(51) International Patent Classification (IPC):
***H01M 10/0525*** *(2010.01)* ***H01M 10/0567*** *(2010.01)*
***H01M 10/42*** *(2006.01)*

(52) Cooperative Patent Classification (CPC):
**H01M 10/0567; H01M 10/0525; H01M 10/4235**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.04.2023 KR 20230045632**

(71) Applicant: **Samsung SDI Co., Ltd.**
**Yongin-si, Gyeonggi-do 17084 (KR)**

(72) Inventors:
- **Ryu, Bokyung**
  **17084 Yongin-si, Gyeonggi-do (KR)**
- **Lee, Tae Jin**
  **17084 Yongin-si, Gyeonggi-do (KR)**
- **Woo, Myungheui**
  **17084 Yongin-si, Gyeonggi-do (KR)**
- **Park, Hyejin**
  **17084 Yongin-si, Gyeonggi-do (KR)**
- **Kim, Sang Hoon**
  **17084 Yongin-si, Gyeonggi-do (KR)**
- **Ra, Hana**
  **17084 Yongin-si, Gyeonggi-do (KR)**

(74) Representative: **Gulde & Partner**
**Patent- und Rechtsanwaltskanzlei mbB**
**Wallstraße 58/59**
**10179 Berlin (DE)**

# (54) ADDITIVE FOR RECHARGEABLE LITHIUM BATTERY, ELECTROLYTE INCLUDING SAME AND RECHARGEABLE LITHIUM BATTERY

(57) Provided are an electrolyte for a rechargeable lithium battery and rechargeable lithium battery, the electrolyte including a core including aerogel, and a shell surrounding the core, wherein the shell includes a polymer having a melting point of about 90 to about 120 °C.

FIG. 1

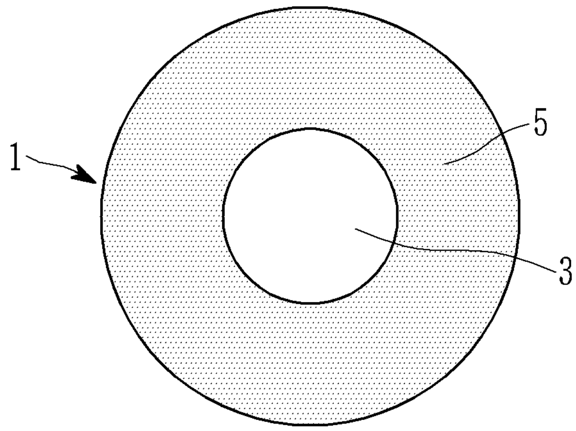


EP 4 443 586 A1

## Description

## BACKGROUND OF THE INVENTION

### (a) Field of the Invention

The present disclosure relates to an additive for a rechargeable lithium battery, an electrolyte for a rechargeable lithium battery including the same, and a rechargeable lithium battery.

### (b) Description of the Related Art

A rechargeable lithium battery may be recharged and has three or more times as high energy density per unit weight as a conventional lead storage battery, nickel-cadmium battery, nickel hydrogen battery, nickel zinc battery, and the like and may be also charged at a high rate and thus, is commercially manufactured for a laptop, a cell phone, an electric tool, an electric bike, and the like, and researches on improvement of additional energy density have been actively made.

Such a rechargeable lithium battery is manufactured by injecting an electrolyte into a battery cell, which includes a positive electrode including a positive electrode active material capable of intercalating/deintercalating lithium ions and a negative electrode including a negative electrode active material capable of intercalating/deintercalating lithium ions.

Particularly, an electrolyte includes an organic solvent in which a lithium salt is dissolved and critically determines stability and performance of a rechargeable lithium battery.

$LiPF_6$ that is most commonly used as a lithium salt of an electrolyte has a problem of reacting with an organic solvent of an electrolyte to promote depletion of a solvent and generate a large amount of gas. If $LiPF_6$ is decomposed, it generates LiF and PFs, which leads to electrolyte depletion in the battery, resulting in degradation in high temperature performance and poor safety.

Accordingly, an electrolyte with improved safety without deterioration in performance even under high temperature conditions has been needed.

## SUMMARY OF THE INVENTION

The invention is defined by the appended claims. The description that follows is subjected to this limitation. Any disclosure lying outside the scope of said claims is only intended for illustrative as well as comparative purposes.

Some embodiments provide an additive for a rechargeable lithium battery with improved thermal stability.

Some embodiments provide an electrolyte for a rechargeable lithium battery having improved cycle-life characteristics, high-temperature safety, and high-temperature reliability by applying the additive.

Some embodiments provide a rechargeable lithium battery including the electrolyte for a rechargeable lithium battery.

An additive for a rechargeable lithium battery according to the invention includes a core including aerogel and a shell surrounding the core, wherein the shell includes a polymer having a melting point of 90 to 120 °C measured by DSC.

A thickness ratio of the core to the shell may be 1:1 to 4:1.

The core may have a thickness of 0.1 μm to 2.0 μm, and the shell may have a thickness of 0.025 μm to 0.5 μm.

The core may have a density of 0.002 g/cm$^3$ to 0.03 g/cm$^3$.

The aerogel may be inorganic oxide aerogel, carbon aerogel, or a combination thereof.

The aerogel may have a monolithic, block, sheet, powder, fiber, or granular shape.

The polymer may include poly(vinylidenefluoride-hexafluoropropylene) (PVDF-HFP), polyacrylic acid, polyethylene, poly(methyl methacrylate), poly(alkylene oxide), poly(alkylene succinate), or a combination thereof.

The additive may be in a form of a fiber formed using electrospinning. The additive may have an ionic conductivity of $1.0\times 10^{-4}$ S·cm$^{-1}$ to $1.0 \times 10^{-2}$ S·cm$^{-1}$ measured by impedance spectroscopy.

According to some embodiments, an electrolyte for a rechargeable lithium battery including a non-aqueous organic solvent, a lithium salt, and the aforementioned additive for a rechargeable lithium battery is provided.

The additive for a rechargeable lithium battery may be included in an amount of 0.1 wt% to 20 wt%, 0.1 wt% to 15 wt%, or 0.1 wt% to 10 wt% based on a total weight of the electrolyte for the rechargeable lithium battery.

According to some embodiments, a rechargeable lithium battery includes a positive electrode including a positive electrode active material; a negative electrode including a negative electrode active material; and the aforementioned electrolyte.

The additive for a rechargeable lithium battery according to some embodiments has excellent electrolyte impregnability and can maintain battery characteristics without increasing battery resistance when applied to the electrolyte.

In addition, in the rechargeable lithium battery including the additive for a rechargeable lithium battery according to some embodiments, ignition of the battery is controlled at a temperature higher than a battery operating temperature, and safety of the battery may be improved.

## BRIEF DESCRIPTION OF THE DRAWINGS

FIG. 1 is a cross-sectional view of an additive according to some embodiments.
FIG. 2 is a schematic view illustrating a rechargeable lithium battery according to some embodiments.

## DETAILED DESCRIPTION OF THE EMBODIMENTS

Hereinafter, embodiments are described in detail so that those skilled in the art can easily implement them. However, the actual applied structure may be implemented in various different forms and is not limited to the implementations described herein.
In the drawings, the thickness of layers, films, panels, regions, etc., are exaggerated for clarity.
It will be understood that when an element such as a layer, film, region, or substrate is referred to as being "on" another element, it may be directly on the other element or intervening elements may also be present. In contrast, when an element is referred to as being "directly on" another element, there are no intervening elements present.
In the present specification, "at least one of A, B, or C", "one of A, B, C, or a combination thereof" and "one of A, B, C, and a combination thereof" refer to each component and a combination thereof (e.g. A; B; A and B; A and C; B and C; or A, B, and C).
Hereinafter, "combination" includes mixtures of two or more, mutual substitution, and layered structures of two or more.
Hereinafter, an additive for a rechargeable lithium battery according to some embodiments will be described with reference to FIG. 1.
FIG. 1 is a cross-sectional view of an additive according to some embodiments.
Referring to FIG. 1, an additive 1 according to the present invention includes a core 3 and a shell 5 surrounding the core 3. The core 3 includes aerogel, and the shell 5 includes a polymer having a melting point of 90 to 120 °C measured by DSC.
Because the additive 1 has a structure including the core 3 and the shell 5, battery characteristics may be maintained without increasing the resistance of the battery compared to the case where the core material is introduced into the battery as it is. In addition, because the core 3 includes aerogel, when the shell 5 of the additive is melted at a high temperature, the core material is released from the core 3 to the outside, reducing the thermal conductivity of the battery and controlling ignition of the battery.
A thickness ratio of the core 3 to the shell 5 may be 1:1 to 4:1, for example 3:2, for example 2:1, and for example, 5:2, for example, 3:1.
When the thickness ratio of the core 3 and the shell 5 is within the above range, the melting of the shell 5 and the release of the core material can be adjusted within an appropriate range, and the occurrence of an electrode short circuit can be effectively controlled in a high-temperature state. In addition, in the case that it is not a high temperature, the shell 5 is not easily damaged, thereby preventing unnecessarily increasing battery resistance and deteriorating battery characteristics.
If the additive including the core 3 and the shell 5 is in the form of a fiber, the "thickness of the core" refers to a straight line length of a line segment from the center of a circle, which is a fiber cross section, to a point on the circumference of the core, and "thickness of the shell" refers to a straight line length between a point where a line segment meets the circumference of the core and a point where it meets the circumference of the shell when a line segment from the center of the circle, which is the cross section of the fiber, to a point on the circumference of the shell is connected.
When the additive including the core 3 and the shell 5 has a spherical shape, the "thickness of the core" refers to a length of a line segment from the center of the sphere to a point on the surface of the core, and the "thickness of the shell" refers to a length between a point where a line segment meets the surface of the core and a point where it meets the surface of the shell when a line segment from the center of the sphere to a point on the surface of the shell is connected.
The core 3 may have a thickness of 0.1 μm to 2.0 μm, for example, greater than or equal to 0.1 μm, greater than or equal to about 0.15 μm, greater than or equal to 0.20 μm, greater than or equal to 0.25 μm, greater than or equal to 0.30 μm, or greater than or equal to 0.35 μm, and less than or equal to 2.0 μm, for example, less than or equal to 1.5 μm, less than or equal to 1.4 μm, less than or equal to 1.3 μm, less than or equal to 1.2 μm, less than or equal to 1.1 μm, or less than or equal to 1.0 μm.

If the core 3 has a thickness within the above range, battery characteristics can be maintained without deteriorating electrolyte impregnability and unnecessarily increasing battery resistance along with the melting of the shell 5 in an appropriate time.

The core 3 may have a density of 0.002 g/cm$^3$ to 0.01g/cm$^3$, for example, greater than or equal to 0.002 g/cm$^3$, greater than or equal to 0.003 g/cm$^3$, greater than or equal to 0.004 g/cm$^3$, or greater than or equal to 0.005 g/cm$^3$, and less than or equal to 0.03 g/cm$^3$, less than or equal to 0.025 g/cm$^3$, less than or equal to 0.020 g/cm$^3$, less than or equal to 0.015 g/cm$^3$, less than or equal to 0.010 g/cm$^3$, less than or equal to 0.009 g/cm$^3$, or less than or equal to 0.08 g/cm$^3$.

If the core 3 has a density within the above range, the additive 1 according to some embodiments may be evenly dissolved in the electrolyte, and battery ignition may be effectively controlled after the core material is released at a high temperature.

The core 3 includes aerogel, and because the aerogel has excellent heat resistance, when released from the core at a high temperature, thermal conductivity may be drastically lowered, and battery ignition may be effectively controlled, thereby improving battery stability.

Aerogels are a class of synthetic porous ultralight material derived from a gel, in which the liquid component for the gel has been replaced with a gas, without significant collapse of the gel structure. The result is a solid with extremely low density and extremely low thermal conductivity. Aerogels can be made from a variety of chemical compounds. The aerogel may include or may be formed of inorganic oxide aerogel, carbon aerogel, or a combination thereof.

The inorganic oxide aerogel may include silica aerogel, alumina aerogel, titania aerogel, and zirconia aerogel.

The aerogel may have a monolithic, block, sheet, powder, fiber, or granular shape.

The aerogel may have a surface area of 100 m$^2$/g to 1,000 m$^2$/g. For example, the surface area may be greater than or equal to 100 m$^2$/g, greater than or equal to 150 m$^2$/g, greater than or equal to 200 m$^2$/g, greater than or equal to 250 m$^2$/g, greater than or equal to 300 m$^2$/g, greater than or equal to 400 m$^2$/g, greater than or equal to 500 m$^2$/g, less than or equal to and 1,000 m$^2$/g, and less than or equal to 950 m$^2$/g, less than or equal to 900 m$^2$/g, less than or equal to 850 m$^2$/g, less than or equal to 800 m$^2$/g, less than or equal to 700 m$^2$/g, or less than or equal to 600 m$^2$/g. The surface area of the aerogel is not particularly limited, and may have a surface area of commercially available aerogels.

The aerogel may have a pore size of 1 nm to 20 nm. For example, it may be greater than or equal to 1 nm, greater than or equal to 3 nm, greater than or equal to 5 nm, greater than or equal to 7 nm, or greater than or equal to 10 nm, and less than or equal to 20 nm, less than or equal to 18 nm, less than or equal to 16 nm, or less than or equal to 14 nm. The pore size of the aerogel is not particularly limited, and may have a pore size of a commercially available aerogel.

The aerogel may be hydrophobically surface-treated. The hydrophobic surface-treated aerogel may be an aerogel substituted with a hydrophobic functional group. The hydrophobic functional group may be a C1 to C6 alkyl group, and specifically may be a methyl group, an ethyl group, a propyl group, a butyl group, a pentyl group, or a combination thereof.

The shell 5 may have a thickness of 0.025 μm to 0.5 μm, for example, greater than or equal to 0.025 μm, greater than or equal to 0.05 μm, greater than or equal to 0.075 μm, greater than or equal to 0.10 μm, greater than or equal to 0.125 μm, or greater than or equal to 0.15 μm, and less than or equal to 0.5 μm, for example, less than or equal to 0.45 μm, less than or equal to 0.40 μm, less than or equal to 0.35 μm, or less than or equal to 0.30 μm, but is not limited thereto.

If the shell 5 has a thickness within the above range, ignition of the battery can be effectively controlled by melting the shell 5 and release of the core material in an appropriate time, and battery characteristics can be maintained by not unnecessarily increasing battery resistance.

The shell 5 is formed of a polymer having a melting point of 90 to 120 °C, and for example, the polymer may be a thermoplastic resin. These polymers have excellent ionic conductivity and can be melted at a specific temperature while remaining stable in an operating temperature range of the battery, thereby contributing to the safety of the battery. In addition, the polymer included in the shell 5 can improve wettability of an electrolyte. Melting points of polymers can be investigated with Differential Scanning Calorimetry, DSC. The melting point of the polymer may be determined according to ISO 3146:2020.

For example, the thermoplastic resin may be poly(vinylidene fluoride-hexafluoropropylene) (PVDF-HFP), polyacrylic acid, polyethylene, poly(methyl methacrylate), poly(alkylene oxide), poly(alkylene succinate), or a combination thereof, for example, poly(vinylidene fluoride-hexafluoropropylene) (PVDF-HFP), polyalkylene oxide, poly(alkylene succinate), or a combination thereof.

The polyalkylene oxide may be polyethylene oxide, polypropylene oxide, polybutylene oxide, polypentylene oxide, polyhexylene oxide, or polyheptylene oxide.

The polyalkylene succinate may be polyethylene succinate, polypropylene succinate, polybutylene succinate, polypentylene succinate, polyhexylene succinate, polyheptylene succinate, or polyoxylene succinate. The polymer included in the shell 5 has a melting point of 90 to 120 °C, for example, greater than or equal to 90 °C, greater than or equal to 92 °C, greater than or equal to 94 °C, greater than or equal to 97 °C, greater than or equal to 100 °C, and less

than or equal to 120 °C, less than or equal to 117 °C, less than or equal to 115 °C, less than or equal to 113 °C, or less than or equal to 110 °C.

Because the melting point of the polymer included in the shell 5 has the above range, the shell 5 is stably maintained in an operating temperature range during charging and discharging of the battery, so that the resistance of the battery may not increase and the shell 5 at a high temperature of about 100 °C or higher and it may be appropriately melted, and the aerogel of the core 3 is released in an appropriate time to effectively control ignition of the battery.

The additive 1 may be in the form of a fiber, for example formed by electrospinning, that is, in the form of a fiber. If the additive is in the form of a fiber, the core material is effectively eluted at a high temperature, thereby effectively controlling ignition of the battery. In addition to the form of a fiber, if it can have a structure including a core 3 and a shell 5 surrounding it, the additive 1 may have an irregular, plate-like, or spherical form.

When preparing the core-shell structured additive 1, the electrospinning process may be performed by a known process in consideration of melting temperatures of aerogel and thermoplastic resin.

The ionic conductivity of the additive 1 may be $1.0\times10^{-4}$ $S\cdot cm^{-1}$ to $1.0\times10^{-2}$ $S\cdot cm^{-1}$ measured by impedance spectroscopy. For example, it may be greater than or equal to $1.0\times10^{-4}$ $S\cdot cm^{-1}$, greater than or equal to $3.0\times10^{-4}$ $S\cdot cm^{-1}$, greater than or equal to $5.0\times10^{-4}$ $S\cdot cm^{-1}$, greater than or equal to $7.0\times10^{-4}$ $S\cdot cm^{-1}$, greater than or equal to $9.0\times10^{-4}$ $S\cdot cm^{-1}$, or greater than or equal to $1.0\times10^{-3}$ $S\cdot cm^{-1}$, and less than or equal to $1.0\times10^{-2}$ $S\cdot cm^{-1}$, for example less than or equal to $0.9\times10^{-2}$ $S\cdot cm^{-1}$, less than or equal to $0.7\times10^{-2}$ $S\cdot cm^{-1}$, less than or equal to $0.5\times10^{-2}$ $S\cdot cm^{-1}$, or less than or equal to $0.3\times10^{-2}$ $S\cdot cm^{-1}$. The ionic conductivity in solid electrolytes is usually measured by impedance spectroscopy (AC technique), which applies a sinusoidal potential at various frequencies to an electrochemical cell with blocking electrodes and records its response. The determination may be done by ISO 11894-1:2013.

If the ionic conductivity of the additive 1 is within the above range, battery characteristics may be maintained without increasing battery resistance when applied to the electrolyte according to some embodiments.

The additive 1 may be included in an amount of 0.1 wt% to 20 wt%, 0.1 wt% to 15 wt%, or 0.1 wt% to 10 wt% based on a total weight of the electrolyte for a rechargeable lithium battery. For example, the additive may be included in an amount of greater than or equal to 0.1 wt%, for example, greater than or equal to 0.2 wt%, greater than or equal to 0.3 wt%, greater than or equal to 0,4 wt%, greater than or equal to 0.5 wt%, greater than or equal to 0.6 wt%, greater than or equal to 0,7 wt%, greater than or equal to 0.8 wt%, greater than or equal to 0.9 wt%, or greater than or equal to 1 wt% and less than or equal to 15.0 wt%, for example, less than or equal to 14.0 wt%, less than or equal to 13.0 wt%, less than or equal to 12.0 wt%, less than or equal to 11.0 wt%, less than or equal to 10.0 wt%, or less than or equal to 9.0 wt% based on a total weight of the electrolyte for a rechargeable lithium battery.

If the content of the additive 1 is within the above range, a rechargeable lithium battery having improved safety can be implemented by maintaining battery characteristics without increasing battery resistance at a battery operating temperature and increasing battery resistance at a temperature exceeding the battery operating temperature.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may be dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC). The ester-based solvent may be methyl acetate, ethyl acetate, n-propyl acetate, t-butyl acetate, methylpropionate, ethylpropionate, propylpropionate, decanolide, mevalonolactone, or caprolactone. The ether-based solvent may be dibutyl ether, tetraglyme, diglyme, dimethoxyethane, 2-methyltetrahydrofuran, or tetrahydrofuran. In addition, the ketone-based solvent may be cyclohexanone. In addition, the alcohol-based solvent may be ethyl alcohol or isopropyl alcohol and the aprotic solvent may be nitriles such as R-CN is a C2 to C20 linear, branched, or cyclic hydrocarbon group and may include a double bond, aromatic ring, or an ether bond, amides such as dimethylformamide, dioxolanes such as 1,3-dioxolane, or sulfolanes.

The non-aqueous organic solvent may be used alone or in a mixture, if the organic solvent is used in a mixture, the mixture ratio may be controlled in accordance with a desirable battery performance.

The carbonate-based solvent is prepared by mixing a cyclic carbonate and a linear carbonate. In this case, when the cyclic carbonate and the chain carbonate are mixed in a volume ratio of 1:1 to 1:9, the performance of the electrolyte may be improved.

The non-aqueous organic solvent may further include an aromatic hydrocarbon-based organic solvent in the carbonate-based solvent. In this case, the carbonate-based solvent and the aromatic hydrocarbon-based solvent may be mixed in a volume ratio of 1:1 to 30:1.

As the aromatic hydrocarbon-based solvent, an aromatic hydrocarbon-based compound represented by Chemical Formula 1 may be used.

[Chemical Formula 1]

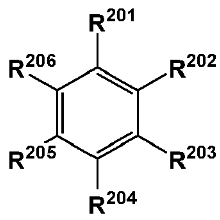

In Chemical Formula 1, $R^{201}$ to $R^{206}$ are the same or different and are selected from hydrogen, a halogen, a C1 to C10 alkyl group, a C1 to C10 haloalkyl group, and a combination thereof.

Specific examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

In order to improve cycle-life of the battery, the electrolyte may further include vinylene carbonate, vinyl ethylene carbonate, or an ethylene-based carbonate-based compound represented by Chemical Formula 2 as a cycle-life improving additive in order to improve battery cycle-life.

[Chemical Formula 2]

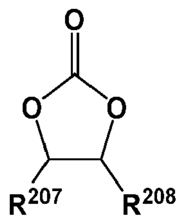

In Chemical Formula 2, $R^{207}$ and $R^{208}$ are the same or different, and hydrogen, a halogen, a cyano group (CN), a nitro group ($NO_2$), or a fluorinated C1 to C5 alkyl group.

Examples of the ethylene carbonate-based compound may be difluoroethylene carbonate, chloroethylene carbonate, dichloroethylene carbonate, bromoethylene carbonate, dibromoethylene carbonate, nitroethylene carbonate, cyanoethylene carbonate or fluoroethylene carbonate. The amount of the additive for improving cycle-life may be used within an appropriate range.

The lithium salt is dissolved in a non-aqueous organic solvent, supplies a battery with lithium ions, basically operates the rechargeable lithium battery, and improves transportation of the lithium ions between positive and negative electrodes.

Examples of the lithium salt include one or more selected from $LiPF_6$, $LiBF_4$, LiDFOP, LiDFOB, $LiPO_2F_2$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide: LiFSI), $LiC_4F_9SO_3$, $LiClO_a$, $LiAlO_2$, $LiAlCl_4$, $LiN(C_xF_{2x+1}SO_2)(C_yF_{2y+1}SO_2)$, wherein, x and y are natural numbers, for example an integer of 1 to 20, LiCl, LiI, or $LiB(C_2O_4)_2$ (lithium bis(oxalato) borate: LiBOB).

The lithium salt may be used in a concentration ranging from 0.1 M to 2.0 M. If the lithium salt is included at the above concentration range, an electrolyte may have excellent performance and lithium ion mobility due to optimal electrolyte conductivity and viscosity.

The additive and the electrolyte may be applied to a rechargeable lithium battery.

Hereinafter, a rechargeable lithium battery according to some embodiments will be described with reference to FIG. 2.

A rechargeable lithium battery 100 according to some embodiments includes a positive electrode 114 including a positive electrode active material; a negative electrode 112 including a negative electrode active material; and the aforementioned electrolyte.

A rechargeable lithium battery may be classified into a lithium ion battery, a lithium ion polymer battery, and a lithium polymer battery depending on kinds of a separator and an electrolyte. It also may be classified to be cylindrical, prismatic, coin-type, pouch-type, and the like depending on shape. In addition, it may be bulk type and thin film type depending on sizes. Structures and manufacturing methods for lithium ion batteries pertaining to this disclosure are well known in the art.

Herein, as an example of the rechargeable lithium battery, a cylindrical rechargeable lithium battery will be exemplarily described. FIG. 2 schematically illustrates the structure of a rechargeable lithium battery according to some embodiments. Referring to FIG. 2, a rechargeable lithium battery 100 according to some embodiments includes a battery cell including a positive electrode 114, a negative electrode 112 facing the positive electrode 114, a separator 113 between the positive electrode 114 and the negative electrode 112, and an electrolyte (not shown) impregnating the positive electrode 114, the negative electrode 112, and the separator 113, a battery case 120 housing the battery cell, and a sealing member 140 sealing the battery case 120. The positive electrode includes a positive electrode current collector and a positive electrode active material layer on the positive electrode current collector, and the positive electrode active material layer includes a positive electrode active material.

The positive electrode active material may include lithiated intercalation compounds that reversibly intercalate and deintercalate lithium ions. Specifically, at least one of a composite oxide of a metal containing cobalt, manganese, nickel or a combination thereof and lithium may be used.

A part of the metal of the composite oxide may be substituted with a metal other than another metal, may be at least one selected from phosphoric acid compounds of the complex oxide, such as $LiFePO_4$, $LiCoPO_4$, or $LiMnPO_4$. The composite oxide having a coating layer on the surface may be used, or a mixture of the composite oxide and the composite oxide having a coating layer may be used. The coating layer may include at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be either amorphous or crystalline. The coating element included in the coating layer may be Mg, Al, Co, K, Na, Ca, Si, Ti, V, Sn, Ge, Ga, B, As, Zr, or a mixture thereof. The coating process may include any conventional processes as long as it does not cause any side effects on the properties of the positive electrode active material (e.g., spray coating or dipping), which is a content that can be well understood by those engaged in the relevant field and thus a detailed description will be omitted.

The positive electrode active material may be, for example, at least one of lithium composite oxides represented by Chemical Formula 3.

[Chemical Formula 3] $Li_xM^1_yM^2_zM^3_{1-y-z}O_2$

In Chemical Formula 3,
$0.5 \le x \le 1.8$, $0 < y \le 1$, $0 \le z \le 1$, $0 \le y+z \le 1$, and $M^1$, $M^2$, and $M^3$ are each independently selected from metals of Ni, Co, Mn, Al, Sr, Mg or La, and the like, and a combination thereof.

In some embodiments, the positive electrode active material may be at least one selected from $LiCoO_2$, $LiNiO_2$, $LiMnO_2$, $LiMn_2O_4$, $LiNi_aMn_bCo_cO_2$ (a+b+c=1), $LiNi_aMn_bCo_cAl_dO_2$ (a+b+c+d=1), or $LiNi_eCo_fAl_gO_2$ (e+f+g=1).

For example, the positive electrode active material selected from $LiNi_aMn_bCo_cO_2$ (a+b+c=1), $LiNi_aMn_bCo_cAl_dO_2$ (a+b+c+d=1), and $LiNi_eCo_fAl_gO_2$ (e+f+g=1) may be a high Ni-based positive electrode active material.

For example, in the case of $LiNi_aMn_bCo_cO_2$ (a+b+c=1) and $LiNi_aMn_bCo_cAl_dO_2$ (a+b+c+d=1), the nickel content may be greater than or equal to about 60% ($a \ge 0.6$), and more specifically, greater than or equal to about 80% ($a \ge 0.8$).

For example, in the case of $LiNi_eCo_fAl_gO_2$ (e+f+g=1), the nickel content may be greater than or equal to about 60% ($e \ge 0.6$), and more specifically, greater than or equal to about 80% ($e \ge 0.8$).

The content of the positive electrode active material may be 90 wt% to 98 wt% based on the total weight of the positive electrode active material layer.

The positive electrode active material layer may optionally include a conductive material and a binder. In this case, each content of the conductive material and the binder may be about 1.0 wt% to about 5.0 wt%, based on a total weight of the positive electrode active material layer.

The conductive material is included to impart conductivity to the positive electrode and any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum silver, and the like; a conductive polymer such as a polyphenylene derivative; or a mixture thereof.

The binder improves binding properties of positive electrode active material particles with one another and with a current collector. Examples thereof may for example include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The positive electrode current collector may include Al, but is not limited thereto.

The negative electrode includes a negative electrode current collector and a negative electrode active material layer including the negative electrode active material formed on the negative electrode current collector.

The negative electrode active material includes a material capable of reversibly intercalating/deintercalating lithium ions, lithium metal, a lithium metal alloy, a material capable of doping and undoping lithium, or a transition metal oxide.

The material that reversibly intercalates/deintercalates lithium ions includes carbon materials and the carbon material may be any generally-used carbon-based negative electrode active material in a rechargeable lithium battery and examples of the carbon material include crystalline carbon, amorphous carbon, and a combination thereof. The crystalline carbon may be non-shaped, or sheet, flake, spherical, or fiber shaped natural graphite or artificial graphite and the amorphous carbon may be a soft carbon, a hard carbon, a mesophase pitch carbonized product, calcined coke, and the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping and dedoping lithium may include Si, $SiO_x$ ($0 < x < 2$), a Si-Q alloy (wherein Q is selected from an alkali metal, an alkaline-earth metal, a Group 13 element, a Group 14 element, a Group 15 element, a Group 16 element, a transition metal, a rare earth element, and a combination thereof, and not Si), Sn, $SnO_2$, a Sn-R alloy (wherein R is an alkali metal, an alkaline-earth metal, a Group 13 element, a Group 14 element, a Group 15 element, a Group 16 element, a transition element, a rare earth element, or a combination thereof, and not Sn), and the like and at least one of them may be mixed with $SiO_2$.

The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combination thereof.

The transition metal oxide may be a vanadium oxide, a lithium vanadium oxide, and the like.

In some embodiments, the negative electrode active material may be a Si-C composite including a Si-based active material and a carbon-based active material.

In the Si-C composite, the Si-based active material may have an average particle diameter of 50 nm to 200 nm. When the Si-based active material has an average particle diameter within the range, the volume expansion occurring during the charge and discharge may be suppressed, and disconnection of conductive paths by particles crushed during the charge and discharge may be prevented.

The Si-based active material may be included in an amount of 1 wt% to 60 wt%, or for example, 3 wt% to 60 wt% based on the total weight of the Si-C composite.

According to some embodiments, the negative electrode active material may further include crystalline carbon along with the aforementioned Si-C composite.

When the negative electrode active material includes the Si-C composite and the crystalline carbon together, the Si-C composite and the crystalline carbon may be included in the form of a mixture, and in this case, the Si-C composite and the crystalline carbon may be included in a weight ratio of about 1 : 99 to about 50 : 50. More specifically, the Si-C composite and the crystalline carbon may be included in a weight ratio of about 5: 95 to about 20: 80.

The crystalline carbon may include, for example, graphite, and more specifically, natural graphite, artificial graphite, or a mixture thereof.

An average particle diameter of the crystalline carbon may be 5 $\mu$m to 30 $\mu$m.

In the present specification, an average particle diameter may be particle size ($D_{50}$) at a volume ratio of 50% in a cumulative size-distribution curve.

The Si-C composite may further include a shell surrounding the surface of the Si-C composite, and the shell may include amorphous carbon. The amorphous carbon may include soft carbon, hard carbon, a mesophase pitch carbonized product, calcined coke, or a mixture thereof.

The amorphous carbon may be included in an amount of about 1 to about 50 parts by weight, for example, about 5 to about 50 parts by weight, or about 10 to about 50 parts by weight based on 100 parts by weight of the carbon-based active material.

In the negative electrode active material layer, the negative electrode active material may be included in an amount of about 95 wt% to about 99 wt% based on the total weight of the negative electrode active material layer.

In some embodiments, the negative electrode active material layer may include a binder, and optionally a conductive material. In the negative electrode active material layer, the amount of the binder may be about 1 wt% to about 5 wt% based on the total weight of the negative electrode active material layer. If the conductive material is further included, it may include about 90 wt% to about 98 wt% of the negative electrode active material, about 1 wt% to about 5 wt% of the binder, and about 1 wt% to about 5 wt% of the conductive material.

The binder improves binding properties of negative electrode active material particles with one another and with a current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, an ethylenepropylene copolymer, polyethyleneoxide, polyvinylpyrrolidone, polyepichlorohydrin, polyphosphazene, polyacrylonitrile, polystyrene, an ethylene propylene diene copolymer, polyvinylpyridine, chlorosulfonatedpolyethylene, latex, a polyester resin, an acrylic resin, a phenolic resin, an epoxy resin, polyvinyl alcohol, and a combination thereof.

When the water-soluble binder is used as the negative electrode binder, a cellulose-based compound may be further used as a thickener to provide viscosity. The cellulose-based compound includes one or more of carboxylmethyl cellulose, hydroxypropylmethyl cellulose, methyl cellulose, or alkali metal salts thereof. The alkali metal may be Na, K, or Li. Such a thickener may be included in an amount of about 0.1 to about 3 parts by weight based on 100 parts by weight of the negative electrode active material.

The conductive material is included to provide electrode conductivity and any electrically conductive material may be used as a conductive material unless it causes a chemical change and examples thereof may be a carbon-based material such as natural graphite, artificial graphite, carbon black, acetylene black, ketjen black, a carbon fiber and the like; a metal-based material such as a metal powder or a metal fiber and the like of copper, nickel, aluminum, silver, and the like; a conductive polymer such as a polyphenylene derivative and the like, or a mixture thereof.

The negative electrode current collector may be selected from a copper foil, a nickel foil, a stainless steel foil, a titanium foil, a nickel foam, a copper foam, a polymer substrate coated with a conductive metal, and a combination thereof.

A separator may be present between the positive electrode and the negative electrode depending on a type of the rechargeable lithium battery. The separator may be a porous substrate; or a composite porous substrate.

The porous substrate is a substrate including pores, through which lithium ions can move. The porous substrate may include polyethylene, polypropylene, polyvinylidene fluoride, or a multilayer film of two or more layers thereof such as a polyethylene/polypropylene double-layered separator, a polyethylene/polypropylene/polyethylene triple-layered separator, and a polypropylene/polyethylene/polypropylene triple-layered separator.

The composite porous substrate may have a form including a porous substrate and a functional layer on the porous substrate. The functional layer may be, for example, at least one of a heat-resistant layer and an adhesive layer from the viewpoint of enabling additional function. For example, the heat-resistant layer may include a heat-resistant resin and optionally a filler. In addition, the adhesive layer may include an adhesive resin and optionally a filler. The filler may be an organic filler or an inorganic filler.

The additive for a rechargeable lithium battery according to some embodiments may be included in the electrolyte as described above, and may be applied to a current collector, an electrode tab, a separator, and the like of a rechargeable lithium battery.

When the additive is applied to a current collector or an electrode tab, a coating solution in which the additive is dispersed in an appropriate solvent may be coated on the uncoated portion of the current collector or the electrode tab. in case that the additive is applied to the separator, at least one surface of the separator may be coated with a coating solution obtained by including the additive in a separator component or dispersing the additive in an appropriate solvent.

Hereinafter, the present disclosure is illustrated in more detail with reference to examples.

## Synthesis of Additives

### Synthesis Example 1

A solution prepared by dispersing 1 wt% of aerogel in a polyacrylonitrile solvent and a polymer solution including 10 wt% of polyvinylidenefluoride hexafluoropropylene) (PVDF-HFP, melting point 110°C) were respectively prepared, and then, electrospinning (applying 15 kV, setting a distance from an elecrospinning needle to ground to be 10 cm) was performed to have a thickness ratio of 1:1 between a core and a shell, to prepare an additive in the form of a fiber.

### Synthesis Example 2

An additive in the form of a fiber was prepared by preparing a solution in which 2 wt% of aerogel was dispersed

in a polyacrylonitrile solvent and a polymer solution including 10 wt% of polyvinylidenefluoride hexafluoropropylene) (PVDF-HFP, melting point: 110°C), respectively and electrospinning them to have a thickness ratio of 2:1 between a core and a shell.

**Synthesis Example 3**

An additive in the form of a fiber was prepared by preparing a solution in which 4 wt% of aerogel was dispersed in a polyacrylonitrile solvent and a polymer solution including 10 wt% of poly(vinylidenefluoride hexafluoropropylene) (PVDF-HFP, melting point: 110°C), respectively and electrospinning them to have a thickness ratio of 4:1 between a core and a shell.

**Comparative Synthesis Example 1**

An additive in the form of a fiber was prepared in the same manner as in Synthesis Example 1 except that the polymer solution was prepared to include polyethylene glycol (PEG, melting point: 50°C) instead of the poly(vinylidenefluoride-hexafluoropropylene) (PVDF-HFP).

**Manufacture of Rechargeable Lithium Battery Cells**

**Example 1**

A rechargeable lithium battery cell was manufactured by using $LiCoO_2$ as a positive electrode, artificial graphite as a negative electrode, and an electrolyte having the following composition.

(Composition of Electrolyte)

Salt: 1.3 M $LiPF_6$

Non-aqueous organic solvent: ethylene carbonate (EC): propylene carbonate (PC): ethyl propionate (EP): propyl propionate (PP) = 15:15:25:45 (a volume ratio)
Additive: 3 wt% of fluoroethylene carbonate, 1 wt% of SN (succinonitrile), 10 wt% of the additive according to Synthesis Example 1
In composition of the electrolyte, "wt%" means a relative content of the additives based on 100 weights of the total electrolyte (a lithium salt + non-aqueous organic solvent + additive).

**Comparative Example 1**

A rechargeable lithium battery cell was manufactured in the same manner as in Example 1 except that the additive of Comparative Synthesis Example 1 was used.

**Comparative Example 2**

A rechargeable lithium battery cell was manufactured in the same manner as in Example 1 except that the additive of Synthesis Example 1 was not used.

**Comparative Example 3**

A rechargeable lithium battery cell was manufactured in the same manner as in Example 1 except that 0.5 wt% of aerogel was used instead of the additive of Synthesis Example 1.

**Comparative Example 4**

A rechargeable lithium battery cell was manufactured in the same manner as in Example 1 except that 2.0 wt% of aerogel was used instead of the additive of Synthesis Example 1.

**Evaluation 1: High temperature Cycle-life Evaluation**

The rechargeable lithium battery cells of Example 1 and Comparative Examples 1, 3, and 4 were constant

current-charged to a voltage of 4.4 V at a current rate of 0.5 C and subsequently, cut off at a current rate of 0.05 C in the constant voltage mode of 4.4 V at 45 °C. Subsequently, the cells were constant current-discharged to a voltage of 3.0 V at the current rate of 0.5 C. The process was 100 times repeated. As a result of this charge and discharge experiment, capacity retention at the 100$^{th}$ cycle was calculated according to Calculation Equation 1, and the results are shown in Table 1.

[Calculation Equation 1]

$$100^{th}\text{ cycle capacity retention rate [\%]} = [100^{th}\text{ cycle discharge capacity} / 1^{st}\text{ cycle discharge capacity}] \times 100$$

[Table 1]

| | High temperature cycle-life (45 °C, 100 cycle) (%) |
|---|---|
| Example 1 | 89.5 |
| Comparative Example 1 | 85.6 |
| Comparative Example 3 | 88.1 |
| Comparative Example 4 | 82.1 |

Referring to Table 1, the rechargeable lithium battery cell of Example 1 exhibited excellent high temperature cycle-life characteristics of 89% at the 100$^{th}$ cycle. The rechargeable lithium battery cell of Example 1 exhibited excellent high temperature cycle-life, compared with the rechargeable lithium battery cells of Comparative Examples 1, 3, and 4.

**Evaluation 2: Thermal Exposure Evaluation**

The rechargeable lithium battery cells of Example 1 and Comparative Examples 2 to 4 were evaluated with respect to thermal exposure after charging at 0.5 C /4.4 V 0.05 C cut-off.

After placing the rechargeable lithium battery cells of Example 1 and Comparative Examples 2 to 4 respectively in a chamber and increasing a temperature of the chamber from room temperature to 136 °C at 5t2 °C/min, while maintaining the temperature for 1 hour or so, changes in the rechargeable lithium battery cells were examined, which was twice performed, and the results are shown in Table 2.

[Table 2]

| | Thermal exposure temperature | | | | | | | |
|---|---|---|---|---|---|---|---|---|
| | 130 °C | | 132 °C | | 134 °C | | 136 °C | |
| | once | twice | once | twice | once | twice | once | twice |
| Example 1 | | | | | | | OK | OK |
| Comparative Example 2 | NG | OK | NG | NG | NG | NG | - | - |
| Comparative Example 3 | - | - | NG | OK | NG | NG | - | - |
| Comparative Example 4 | - | - | - | - | OK | OK | OK | OK |

In Table 2, the "NG" means that thermal runaway was observed at the thermal exposure temperature, and the "OK" means that there was no thermal runaway at the thermal exposure temperature.

The rechargeable lithium battery cells of Comparative Examples 2 to 3 exhibited thermal runaway, when exposed to a high temperature, but the rechargeable lithium battery cells of the examples exhibited no thermal runaway due to the aerogel of the core materials, when exposed to a high temperature. Accordingly, the rechargeable lithium battery cells of the examples exhibited excellent battery safety, compared with the rechargeable lithium battery cells of the comparative examples.

Summarizing the evaluation results, since the rechargeable lithium battery cell of Comparative Example 2 included no aerogel, thermal runaway was observed. Since the rechargeable lithium battery cell of Comparative Example 3 had no core-shell structure, inferior high temperature cycle-life characteristics and also, thermal runaway due to the use of a small amount of the aerogel were observed. The rechargeable lithium battery cell of Comparative Example 4 included sufficient aerogels and thus exhibited no thermal runaway but had no core-shell structure and exhibited inferior high temperature cycle-life characteristics. On the contrary, the rechargeable lithium battery cells of the examples exhibited excellent high temperature cycle-life characteristics and simultaneously, no thermal runaway on the thermal exposure but maintained battery characteristics and simultaneously, exhibited improved battery safety.

## Claims

**1.** An additive (1) for a rechargeable lithium battery (100), comprising

a core (3) including aerogel, and a shell (5) surrounding the core (3),
wherein the shell (5) includes a polymer having a melting point of 90°C to 120 °C measured by DSC.

**2.** The additive of claim 1, wherein
a thickness ratio of the core (3) to the shell (5) is 1:1 to 4:1.

**3.** The additive of claim 1 or 2, wherein
the core (3) has a thickness of 0.1 μm to 2.0 μm, and the shell (5) has a thickness of 0.025 μm to 0.5 μm.

**4.** The additive of any one of the preceding claims, wherein
the core (3) has a density of 0.002 $g/cm^3$ to 0.03 $g/cm^3$.

**5.** The additive of any one of the preceding claims, wherein
the aerogel is inorganic oxide aerogel, carbon aerogel, or a combination thereof.

**6.** The additive of any one of the preceding claims, wherein
the aerogel has a monolithic, block, sheet, powder, fiber, or granular shape.

**7.** The additive of any one of the preceding claims, wherein
the polymer includes poly(vinylidenefluoride-hexafluoropropylene) (PVDF-HFP), polyacrylic acid, polyethylene, poly(methyl methacrylate), poly(alkylene oxide), poly(alkylene succinate), or a combination thereof.

**8.** The additive of any one of the preceding claims, wherein
the additive (1) has a form of a fiber.

**9.** The additive of any one of the preceding claims, wherein
the additive has an ionic conductivity of $1.0\times10^{-4}$ $S\cdot cm^{-1}$ to $1.0\times10^{-2}$ $S\cdot cm^{-1}$ measured by impedance spectroscopy.

**10.** An electrolyte for a rechargeable lithium battery (100), comprising

a non-aqueous organic solvent,
a lithium salt, and
the additive (1) according to any one of the preceding claims.

**11.** The electrolyte of claim 10, wherein
the additive (1) is included in an amount of 0.1 wt% to 20 wt% based on a total weight of the electrolyte.

**12.** The electrolyte of claim 11, wherein
the additive (1) is included in an amount of 0.1 wt% to 15 wt% based on a total weight of the electrolyte.

**13.** The electrolyte of claim 12, wherein
the additive (1) is included in an amount of 0.1 wt% to 10 wt% based on a total weight of the electrolyte.

**14.** A rechargeable lithium battery (100), comprising

a positive electrode (114) including a positive electrode active material;
a negative electrode (112) including a negative electrode active material; and
the electrolyte according to any one of claims 10 to 13.

FIG. 1

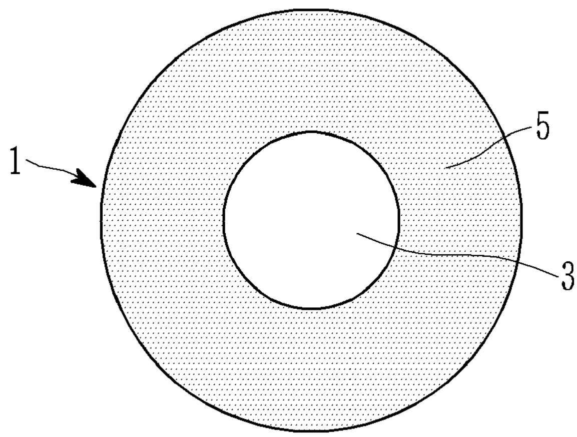

FIG. 2

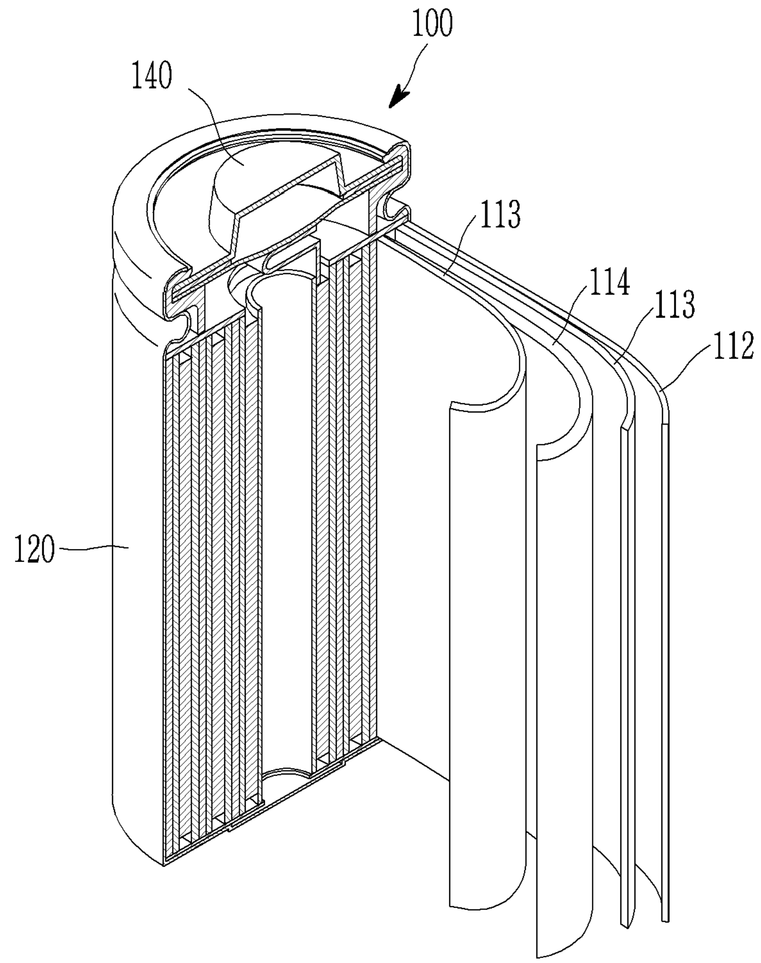

Europäisches Patentamt
European Patent Office
Office européen des brevets

# EUROPEAN SEARCH REPORT

Application Number
EP 23 19 7833

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | CN 113 451 664 A (DONGYING HI TECH SPRING CHEMICAL IND CO LTD) 28 September 2021 (2021-09-28)<br>* Detailed ways *<br>* claims 1-4 *<br>* examples 1, 5 *<br>* figures 1-2 * | 1-4,6-14<br>5 | INV.<br>H01M10/0525<br>H01M10/0567<br>H01M10/42 |
| Y<br>A | CN 108 461 754 A (CHENGDU NEW KELI CHEM SCI CO) 28 August 2018 (2018-08-28)<br>* abstract *<br>* Summary of the invention * | 5<br>1-4,6-14 | |
| A | CN 110 994 019 A (SHANGHAI AEROSPACE POWER TECHNOLOGY CO LTD ET AL.) 10 April 2020 (2020-04-10)<br>* abstract *<br>* Summary of the invention *<br>* figures 1-2 * | 1-14 | |
| | | | TECHNICAL FIELDS SEARCHED (IPC) |
| | | | H01M |

The present search report has been drawn up for all claims

2

| Place of search | Date of completion of the search | Examiner |
|---|---|---|
| Munich | 30 April 2024 | Kelly, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 19 7833

This annex lists the patent family members relating to the patent documents cited in the above-mentioned European search report. The members are as contained in the European Patent Office EDP file on
The European Patent Office is in no way liable for these particulars which are merely given for the purpose of information.

30-04-2024

| Patent document cited in search report | | Publication date | Patent family member(s) | Publication date |
|---|---|---|---|---|
| CN 113451664 | A | 28-09-2021 | NONE | |
| CN 108461754 | A | 28-08-2018 | NONE | |
| CN 110994019 | A | 10-04-2020 | NONE | |

EPO FORM P0459

For more details about this annex : see Official Journal of the European Patent Office, No. 12/82